# EUROPÄISCHE PATENTSCHRIFT

(11) **EP 0 923 717 B1**
(45) Veröffentlichungstag und Bekanntmachung des Hinweises auf die Patenterteilung: **03.04.2002**
(21) Anmeldenummer: 97953618.2
(22) Anmeldetag: 05.12.1997
(51) Int. Cl.: G01L 9/00, G01L 19/14

(54) **VORRICHTUNG ZUR ERFASSUNG DES DRUCKS UND DER TEMPERATUR IM SAUGROHR EINER BRENNKRAFTMASCHINE**
DEVICE FOR DETERMINING THE PRESSURE AND TEMPERATURE IN THE SUCTION PIPE OF AN INTERNAL COMBUSTION ENGINE
DISPOSITIF POUR DETERMINER LA PRESSION ET LA TEMPERATURE DANS LA TUBULURE D'ADMISSION D'UN MOTEUR A COMBUSTION INTERNE

(30) Priorität: 21.03.1997 DE 19711939
(43) Veröffentlichungstag der Anmeldung: 23.06.1999
(73) Patentinhaber: ROBERT BOSCH GMBH, 70442 Stuttgart (DE)
(72) Erfinder: NÄGELE, Erwin, D-74394 Hessigheim (DE); KUHNT, Winfried, D-70193 Stuttgart (DE); HIRSCHBERGER, Klaus, D-71701 Schwieberdingen (DE); LIPPHARDT, Uwe, D-72770 Reutlingen (DE)
(86) Internationale Anmeldenummer: DE9702841
(87) Internationale Veröffentlichungsnummer: WO9843056

(56) Entgegenhaltungen:
- WO-A-97/37204
- DE-A- 2 851 716
- DE-A- 4 317 312
- US-A- 5 257 547

## Beschreibung

### Stand der Technik

Die Erfindung betrifft eine Vorrichtung zur Erfassung des Drucks und der Temperatur im Saugrohr einer Brennkraftmaschine, wobei in einem gemeinsamen Gehäuse ein Temperatursensor und ein auf einem Träger zusammen mit einer Auswerteschaltung verspannungsarm befestigter Drucksensor angeordnet sind.

Eine Vorrichtung zur Erfassung des Drucks und der Temperatur im Saugrohr einer Brennkraftmaschine, bei der in einem gemeinsamen Gehäuse ein Temperatursensor und ein Drucksensor angeordnet sind, geht beispielsweise aus der DE 28 51 716 C1 hervor.

Die Kombination eines beispielsweise aus der DE 43 17 312 A1 hervorgehenden Drucksensors mit einem Temperaturfühler ist in Fig. 5 dargestellt.

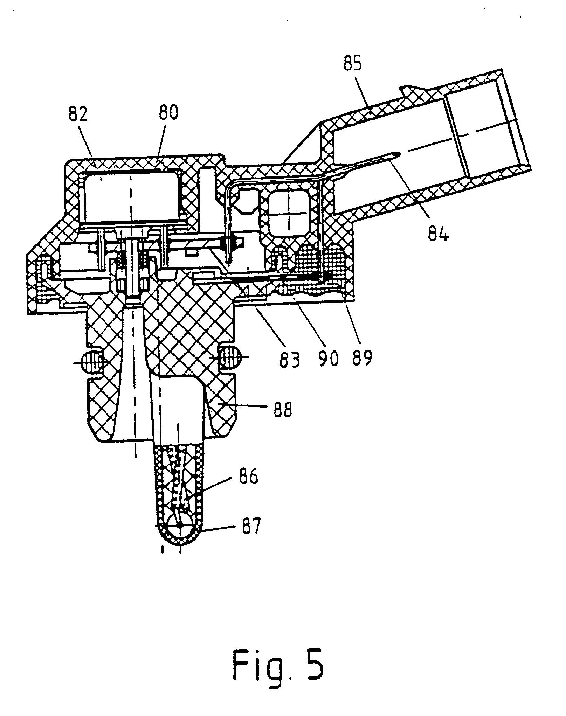

Bei dem in Fig. 5 dargestellten Drucksensor wird ein Ein-Chip-Silizium-Drucksensor (nicht dargestellt) verwendet, der eine Sensorzelle umfaßt, bei welcher der Druck auf die Rückseite einer Membran eingeleitet wird und bei dem auf der Vorderseite der Membran für die Messung des Absolutdrucks ein Referenzvakuum vorgesehen ist. Der Drucksensor ist in einem hermetisch dichten TO-Gehäuse 82 untergebracht, das seinerseits in dem Gehäuse 80 der gesamten Vorrichtung zur Erfassung des Drucks und der Temperatur angeordnet ist. In dem Gehäuse 80 ist des weiteren eine Leiterplatte 83 mit Kondensatoren angeordnet, die im Hinblick auf die elektromagnetische Verträglichkeit erforderlich sind. Die Leiterplatte 83 dient ferner der Verbindung zu Flachsteckkontakten 84, die in einem an dem Gehäuse 80 angeformten Stutzen 85 angeordnet sind.

In einem Druckstutzen 88 ist ferner ein in eine rohrförmige Kunststoffhülse 87 eingespritzter Temperatursensor 86 in Form eines NTC-Widerstands angeordnet, dessen Anschlußleitungen über mit den NTC-Drähten verschweißte Einlegeteile 90 mit Flachsteckerkontakten 84 elektrisch leitend verbunden sind.

Eine derartige Vorrichtung zur Erfassung des Drucks und der Temperatur ist nicht nur auf sehr aufwendige Weise herzustellen, so müssen beispielsweise die elektrischen Verbindungen zwischen den Anschlußleitungen des Temperatursensors 86 und des Drucksensors 82 mit der Leiterplatte 85 und mit den Flachsteckerkontakten 84 im fertig montierten Zustand durch eine Lötverbindung hergestellt werden. Diese Lötverbindung muß daraufhin mit beispielsweise einer Klebemasse 89 zur Abdichtung vergossen werden.

Problematisch ist bei einer derartigen Vorrichtung auch, daß der Temperatursensor 86 in einer Kunststoffhülse 87 angeordnet ist, da hieraus eine für viele Anwendungen zu lange Ansprechzeit des Temperatursensors 86 resultiert.

Darüber hinaus sind Vorrichtungen zur Erfassung von Druck und Temperatur in dem Saugrohr einer Brennkraftmaschine bekannt, bei denen der Drucksensor auf seiner Vorderseite mit dem Druck beaufschlagt wird. Der eigentliche Drucksensor ist auf einem Glassockel angeordnet. Zwischen dem Glassockel und dem Drucksensor ist ein Referenzvakuum eingeschlossen. Der Drucksensor in Form eines Chips ist von einem Rähmchen umgeben und ist durch ein Schutzgel vor Umgebungseinflüssen geschützt. Auch derartige Vorrichtungen erfordern eine aufwendige und zum Teil komplizierte Herstellung. Darüber hinaus kann nicht ausgeschlossen werden, daß sich über das Gehäuse Spannungen u.dgl. auf den sehr empfindlichen Drucksensor übertragen und das Meßergebnis verfälschen.

Der Erfindung liegt daher die Aufgabe zugrunde, eine Vorrichtung zur Erfassung des Drucks und der Temperatur im Saugrohr einer Brennkraftmaschine der gattungsgemäßen Art derart weiterzubilden, daß diese bei einfacher Herstellung eine präzise Temperaturmessung und insbesondere eine sehr präzise Druckmessung ermöglicht.

### Vorteile der Erfindung

Diese Aufgabe wird bei einer Vorrichtung zur Erfassung des Drucks und der Temperatur im Saugrohr einer Brennkraftmaschine der eingangs beschriebenen Art erfindungsgemäß dadurch gelöst, daß zur Einleitung eines unter Druck stehenden Mediums ein an dem Gehäuse befestigtes Stutzenteil und ein sowohl mit dem Träger als auch mit dem Stutzenteil über mechanische Verspannungen entkoppelnde Dichtklebungen verbundenes Zwischenstück vorgesehen sind.

Die zweiteilige Ausbildung des Druckanschlusses durch das Stutzenteil und das Zwischenstück, wobei das Zwischenstück lediglich über Dichtklebungen mit dem Träger als auch mit dem Stutzenteil verbunden ist, so daß mechanische Verspannungen weitestgehend entkoppelt werden, hat den besonders großen Vorteil, daß durch diesen Aufbau die Meßpräzision der Druckmessung erhöht wird, da Verspannungen, die beispielsweise auf das Gehäuse oder auf den Druckanschluß wirken, nicht auf den Drucksensor übertragen werden. Des weiteren wird durch diesen verhältnismäßig einfachen mechanischen Aufbau eine leichte und unproblematische Herstellung der gesamten Vorrichtung gewährleistet.

Der Träger, auf dem der Drucksensor befestigt ist, kann rein prinzipiell auf die unterschiedlichste Art und Weise an dem Gehäuse befestigt werden. Eine besonders vorteilhafte Ausführungsform, die insbesondere eine sehr gute Druckentkopplung ermöglicht, sieht vor, daß der Träger in dem Gehäuse lediglich an vorgegebenen Auflagepunkten aufgeklebt ist. Diese Auflagepunkte sind so gewählt, daß möglichst wenige, die Druckmessung verfälschende Verspannungen auf den Drucksensor übertragen werden.

Um den Drucksensor gegenüber Umgebungseinflüssen zu schützen, ist vorteilhafterweise vorgesehen, daß um den Drucksensor ein Ring angeordnet ist und daß der Zwischenraum zwischen dem Ring und dem Sensor mit einem chemikalienbeständigen Gel ausgefüllt ist.

Als chemikalienbeständiges Gel hat sich ein Fluor-Silikon-Gel als besonders vorteilhaft erwiesen.

Was die Anordnung des Temperatursensors in der Vorrichtung betrifft, so sind hier ebenfalls die unterschiedlichsten Ausführungsformen möglich. Um eine besonders direkte Ankopplung des Temperatursensors an das zu messende Medium zu ermöglichen, ist vorteilhafterweise bei einem Ausführungsbeispiel vorgesehen, daß der Temperatursensor an dem Stutzenteil derart befestigt ist, daß er in dessen Inneres ragt.

Insbesondere hinsichtlich einer besonders einfachen Montage des Temperatursensors ist vorgesehen, daß die Anschlußleitungen des Temperatursensors durch einen an dem Stutzenteil angeformten federnden Clipsbügel an zwei am Stutzenteil ausgebildeten Backen geklemmt werden können. Auf diese Weise kann der Temperatursensor nicht nur auf sehr einfache Weise an dem Stutzenteil montiert und positioniert werden, es wird darüber hinaus auch durch die durch die Clipsbügel vermittelte Klemmverbindung eine beschädigungsfreie Befestigung der Anschlußleitungen des Temperatursensors ermöglicht.

Um sicherzustellen, daß der Temperatursensor und seine Anschlußleitungen nicht korrodieren oder durch andere Umgebungseinflüsse beschädigt und angegriffen werden, ist vorteilhafterweise vorgesehen, daß der Temperatursensor und dessen Anschlußleitungen mit einem Schutzlack oder einer Schutzbeschichtung überzogen sind.

Vorzugsweise ist dieser Schutzlack ein Polyesterimid-Lack.

Insbesondere hinsichtlich einer guten Kontaktierung, die durch eine besonders einfache Montage herstellbar ist, ist ferner vorzugsweise vorgesehen, daß zur Kontaktierung der Anschlußleitungen des Temperatursensors mit im Gehäuse angeordneten, nach außen geführten Steckerkontaktstiften Klemmschneidverbindungen vorgesehen sind.

### Zeichnung

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Schnittdarstellung einer erfindungsgemäßen Vorrichtung zur Erfassung des Drucks und der Temperatur im Saugrohr einer Brennkraftmaschine;
- Fig. 2: eine Draufsicht auf die in Fig. 1 dargestellte erfindungsgemäße Vorrichtung;
- Fig. 3: eine Detaildarstellung des Stutzenteils der in Fig. 1 dargestellten erfindungsgemäßen Vorrichtung sowie eine schematische Draufsicht eines der Befestigung eines Temperatursensors dienenden, an dem Stutzenteil angeordneten Clipsbügels;
- Fig. 4: eine teilweise weggebrochene Draufsicht auf das Gehäuse der in Fig. 1 dargestellten erfindungsgemäßen Vorrichtung zur Verdeutlichung der Schneidklemmverbindungen und
- Fig. 5: eine aus dem Stand der Technik bekannte Vorrichtung zur Erfassung des Drucks und der Temperatur im Saugrohr einer Brennkraftmaschine.

### Beschreibung eines Ausführungsbeispiels

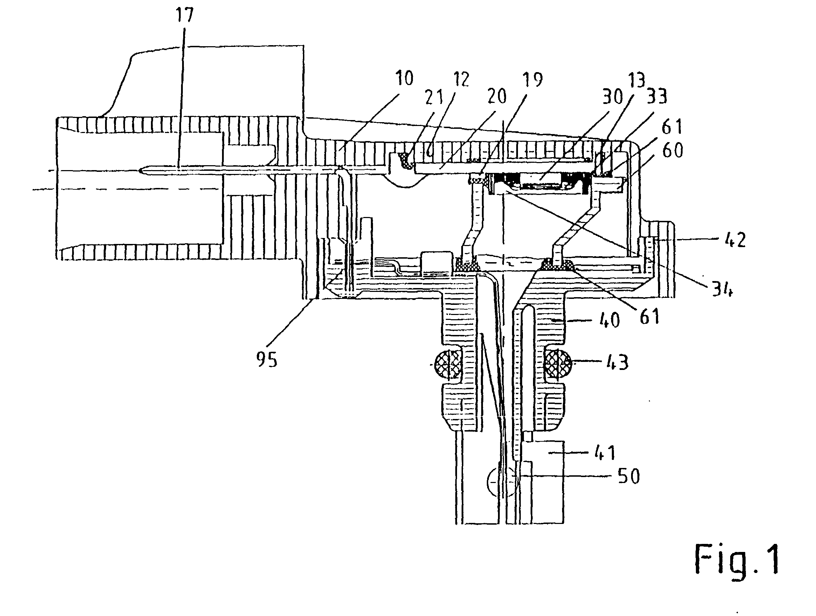

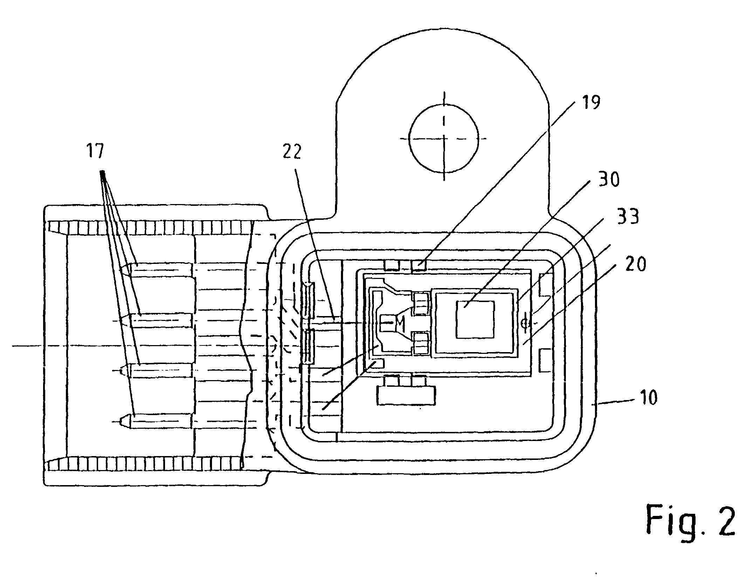

Ein Ausführungsbeispiel einer Vorrichtung zur Erfassung des Drucks und der Temperatur im Saugrohr einer Brennkraftmaschine, dargestellt in den Figuren 1 bis 4, umfaßt ein als Ganzes mit 10 bezeichnetes Gehäuse, in dem ein Träger 20, beispielsweise ein Hybrid, über Klebeverbindungen 21 befestigt ist.

Der Träger 20 ist dabei nicht ganzflächig auf eine dafür vorgesehene Fläche des Gehäuses 10 aufgeklebt, um auf das Gehäuse einwirkende Kräfte, beispielsweise ein Verziehen des Gehäuses 10, oder Kräfte, die beim Anschrauben des Gehäuses entstehen, von dem Träger 20 und damit von einem auf ihm angeordneten Drucksensor 30 fernzuhalten.

Der Träger 20 ist deshalb nur im Bereich seiner Bondlands, d.h. dort, wo die Bonddrähte 22 kontaktiert sind, auf einen eigens dafür vorgesehenen Steg 12 geklebt. Auf der diesem Steg 12 gegenüberliegenden Seite ist der Träger 20 dagegen lediglich nur auf einen einzigen Auflagepunkt 13 aufgeklebt.

Dort, wo der Drucksensor 30 auf dem Träger 20 befestigt ist, liegt der Träger 20 jedoch frei, damit vom Gehäuse 10 keine Biegemomente auf den Träger 20 und hierdurch auch auf den auf ihm angeordneten Drucksensor 30 übertragen werden können. Die Klebeverbindung zwischen dem Träger 20 und dem Gehäuse 10 wird vor dem Bonden ausgehärtet.

Der auf dem Träger 20 angeordnete, an sich bekannte Drucksensor 30 weist einen Glassockel sowie einen auf diesem angeordneten Silizium-Chip auf, auf dessen Oberfläche beispielsweise eine Wheatstone-Brücke aus piezoresistiven Widerstandselementen angeordnet ist. Die für die Druckerfassung notwendige Membran ist durch Ätzen der Silizium-Chip-Rückeite hergestellt. Die Verbindung des Silizium-Chip mit dem Glassockel wird unter Vakuum hergestellt, so daß sich anschließend in der freigeätzten Kaverne Vakuum befindet.

Der Drucksensor 30 ist von einem Ring 33, beispielsweise einem IC-Ring, umgeben. Der Zwischenraum 34 zwischen dem Ring 33 und dem Drucksensor 30 ist mit einem Fluor-Silikon-Gel ausgefüllt. Durch dieses Fluor-Silikon-Gel wird sichergestellt, daß der Drucksensor 30 einschließlich seiner Dünndrahtgoldbonds vor einer Berührung und einem Kontakt mit in einer Brennkraftmaschine vorhandenen Medien, wie beispielsweise Benzin oder Abgaskondensat, geschützt ist. Der Ring 33 dient dabei sowohl als Begrenzung des Fluor-Silikon-Gels nach außen als auch als Schutz gegenüber von außen eindringenden Medien, wie z.B. Klebstoff.

Im unteren Bereich des Gehäuses 10 ist ein Stutzenteil 40 angeordnet, welches durch eine Klebeverbindung 42 mit dem Gehäuseteil 10 verbunden ist. In dem Stutzenteil 40, das in das Innere des Ansaugrohres ragt und dort mittels eines O-Rings 43 abgedichtet ist, ist ein Temperatursensor 50, beispielsweise ein NTC-Widerstand, angeordnet.

Zwischen dem Stutzenteil 40 und dem auf dem Träger 20 angeordneten Drucksensor 30 ist ein Zwischenstück 60 angeordnet. Das Zwischenstück 60 ist sowohl mit dem Träger 20/Gehäuse 10 als auch mit dem Stutzenteil 40 über mechanische Verspannungen entkoppelnde Dichtklebungen 61 verbunden.

An dem Gehäuse 10 sind dabei zur Befestigung des Zwischenstücks 60 eigens hierfür vorgesehene Auflageflächen 19 vorgesehen. Die Befestigung des Zwischenstücks 60 durch die Dichtklebungen 61 wird dabei so ausgeführt, daß das Zwischenstück 60 nur an den Auflageflächen 19 am Gehäuse 10 aufliegt und daß sich entlang einer Kleberaupe um den Ring 33 ein konstanter Klebespalt zum Träger 20 ergibt, durch den der Träger 20 mechanisch gegen Verspannung entkoppelt ist.

Die Kleberaupe dient dabei gleichzeitig als unmittelbare Abdeckung der elektrischen Leiterbahnen (nicht dargestellt) um den Ring 33 wie auch der Bildung und Abdichtung einer Druckzelle innerhalb des Gehäuses des Drucksensors 30.

Durch die Dichtklebungen 61 wird auf besonders wirkungsvolle Weise vermieden, daß mechanische Verspannungen, Drücke u.dgl. auf den Träger 20 und insbesondere auf den Drucksensor 30 übertragen werden.

Wie aus Fig. 1 hervorgeht, ist die Höhe des Zwischenstücks 60 so gewählt, daß sich zwischen dem Stutzenteil 40 und dem Zwischenstück 60 im montierten Zustand ebenfalls ein konstanter Klebespalt der Dichtklebung 61 ausbildet, der Kräfte, die vom Stutzenteil 40 auf das Zwischenstück 60 übertragen werden können, entkoppelt.

Das Zwischenstück 60 dient daher lediglich der Abdichtung der Druckzelle, während eine durch die Befestigung des Gehäuses 10 und durch eine Druckbelastung auftretenden Kräfte durch die weniger elastisch ausgebildete Klebeverbindung 42 zwischen dem Gehäuse 10 und dem Stutzen 40 abgefangen werden.

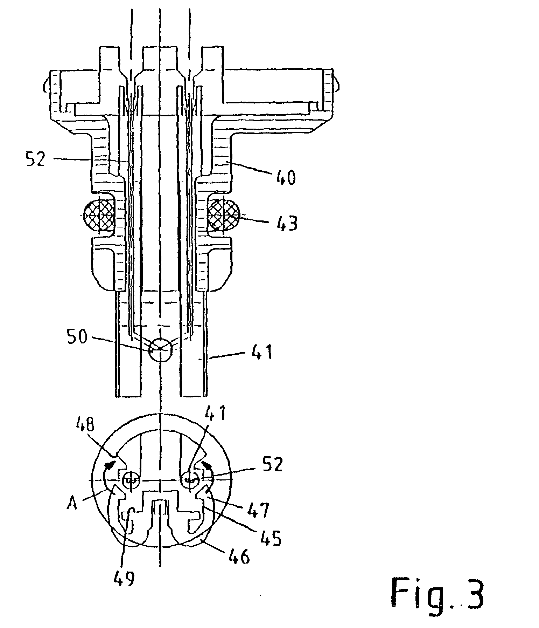

Wie aus Fig. 1, Fig. 3 hervorgeht, ist der Temperatursensor 50 in Form eines NTC-Widerstandes durch einen an dem Stutzenteil 40 angeformten federnden Clipsbügel 45 befestigt. Der Clipsbügel 45 ist in dem unteren Teil der Fig. 3 im nichtmontierten Zustand dargestellt. Zur Befestigung der Anschlußleitungen 52 des Temperatursensors 50 werden zwei Backen 46, die in ihrem den Anschlußleitungen 52 des Temperatursensors 50 zugewandten vorderen Bereich Rastnasen 47 aufweisen, derart in am Clipsbügel 45 vorgesehene Rastöffnungen 48 entlang durch die Pfeile A gezeigten Richtungen gedrückt, daß an den Backen 46 angeformte Klemmflächen 49 an den Anschlußleitungen 52 des Temperatursensors 50 zur Anlage kommen und diese an Backen 41, die an dem Stutzenteil 40 angeformt sind, festklemmen.

Der Clipsbügel 45 ist dabei so ausgestaltet, daß der O-Ring 43 zur Dichtung des Stutzenteils 40 nur dann auf das Stutzenteil 40 aufgeschoben werden kann, wenn der Temperatursensor 50 durch die beschriebene Clipsverbindung bereits an dem Stutzenteil 40 befestigt ist.

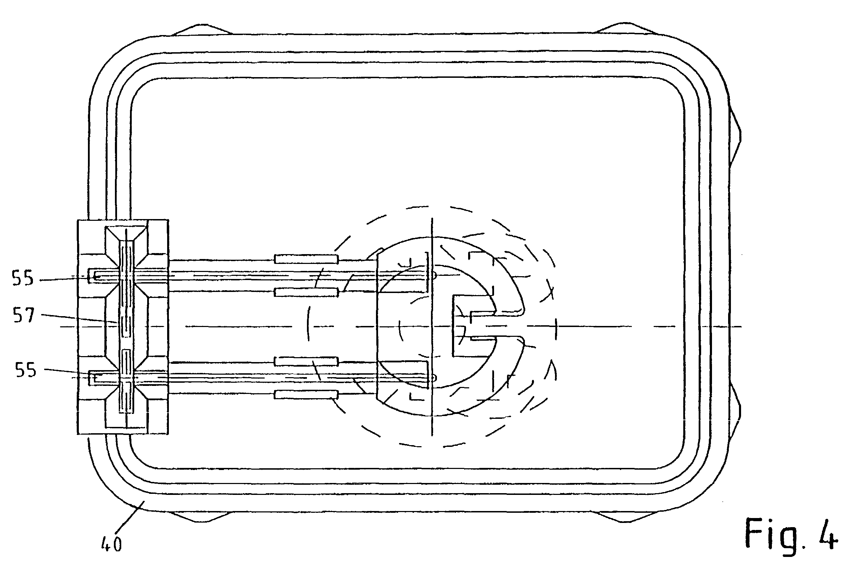

Die um etwa 90° abgewinkelten Anschlußleitungen 52 des Temperatursensors 50 werden mittels einer Schneidklemmverbindung 55, die insbesondere aus Fig. 1 und Fig. 4 hervorgeht, mit Steckerkontaktstiften 17 elektrisch leitend verbunden. Die Steckerkontaktstifte 17 weisen hierzu in ihrem unteren Bereich V-förmige Öffnungen 57 auf, in die die Anschlußleitungen 52 des Temperatursensors 50 gedrückt werden.

Sowohl der Temperatursensor 50 als auch dessen Anschlußleitungen 52 sind von einem Polyesterimid-Schutzlack überzogen, wodurch nicht nur ein Schutz gegenüber Medien, die von außen auf den Temperatursensor 50 und dessen Anschlußleitungen 52 einwirken, bewerkstelligt wird, sondern auch eine besonders günstige Ansprechzeit des Temperatursensors erreicht wird.

## Patentansprüche

1. Vorrichtung zur Erfassung des Drucks und der Temperatur im Saugrohr einer Brennkraftmaschine, wobei in einem gemeinsamen Gehäuse (10) ein Temperatursensor (50) und ein auf einem Träger (20) zusammen mit einer Auswerteschaltung weitestgehend verspannungsarm befestigter Drucksensor (30) angeordnet sind, **dadurch gekennzeichnet, daß** zur Einleitung eines unter Druck stehenden Mediums ein an dem Gehäuse (10) befestigtes Stutzenteil (40) und ein sowohl mit dem Träger (20) als auch mit dem Stutzenteil (40) über mechanische Verspannungen entkoppelnde Dichtklebungen (61) verbundenes Zwischenstück (60) vorgesehen sind.

2. Vorrichtung nach Anspruch 1, **dadurch gekennzeichnet, daß** der Träger (20) in dem Gehäuse (10) lediglich an vorgegebenen Auflagepunkten (12, 13) aufgeklebt ist.

3. Vorrichtung nach Anspruch 1 oder 2, **dadurch gekennzeichnet, daß** um den Drucksensor (30) ein Ring (33) angeordnet ist und daß der Zwischenraum (34) zwischen dem Ring (33) und dem Drucksensor (30) mit einem chemikalienbeständigen Gel ausgefüllt ist.

4. Vorrichtung nach Anspruch 3, **dadurch gekennzeichnet, daß** das chemikalienbeständige Gel ein Fluor-Silikon-Gel ist.

5. Vorrichtung nach einem der Ansprüche 1 bis 4, **dadurch gekennzeichnet, daß** der Temperatursensor (50) an dem Stutzenteil (40) derart befestigt ist, daß er in dessen Inneres ragt.

6. Vorrichtung nach Anspruch 5, **dadurch gekennzeichnet, daß** Anschlußleitungen (52) des Temperatursensors (50) durch einen an dem Stutzenteil (40) angeformten federnden Clipsbügel (45) an zwei an dem Stutzenteil (40) ausgebildeten Backen (41) geklemmt werden.

7. Vorrichtung nach Anspruch 6, **dadurch gekennzeichnet, daß** der Temperatursensor (50) und dessen Anschlußleitungen (52) mit einem Schutzlack oder einer Schutzbeschichtung überzogen sind.

8. Vorrichtung nach Anspruch 7, **dadurch gekennzeichnet, daß** der Schutzlack ein Polyesterimid-Lack ist.

9. Vorrichtung nach einem der Ansprüche 6 bis 8, **dadurch gekennzeichnet, daß** zur Kontaktierung der Anschlußleitungen (52) des Temperatursensors (50) mit im Gehäuse (10) angeordneten, nach außen geführten Steckerkontaktstiften (17) Schneidklemmverbindungen (55) vorgesehen sind.

## Claims

1. Device for detecting the pressure and temperature in the intake pipe of an internal combustion engine, a temperature sensor (50) and a pressure sensor (30), which is fixed on a carrier (20) in a manner that involves very little stress together with an evaluation circuit, being arranged in a common housing (10), **characterized in that** a stub component (40), which is secured on the housing (10), and an intermediate piece (60), which is connected both to the carrier (20) and to the stub component (40) by means of adhesive sealing bonds (61) that decouple mechanical stresses, are provided for the introduction of a pressurized medium.

2. Device according to Claim 1, **characterized in that** the carrier (20) is bonded on in the housing (10) only at predetermined points of contact (12, 13).

3. Device according to Claim 1 or 2, **characterized in that** a ring (33) is arranged around the pressure sensor (30) and **in that** the interspace (34) between the ring (33) and the pressure sensor (30) is filled with a chemical-resistant gel.

4. Device according to Claim 3, **characterized in that** the chemical-resistant gel is a fluorosilicone gel.

5. Device according to one of Claims 1 to 4, **characterized in that** the temperature sensor (50) is secured on the stub component (40) in such a way that it projects into the interior of the latter.

6. Device according to Claim 5, **characterized in that** connecting lines (52) of the temperature sensor (50) are clamped on two jaws (41) formed on the stub component (40) by means of a resilient clip (45) formed on the stub component (40).

7. Device according to Claim 6, **characterized in that** the temperature sensor (50) and its connecting lines (52) are covered with a protective enamel or a protective coating.

8. Device according to Claim 7, **characterized in that** the protective enamel is a polyester imide enamel.

9. Device according to one of Claims 6 to 8, **characterized in that** insulation displacement connections (55) are provided for the purpose of making contact between the connecting lines (52) of the temperature sensor (50) and plug contact pins (17) arranged in the housing (10) and directed outwards.

## Revendications

1. Dispositif de détection de la pression et de la température dans la tubulure d'aspiration d'un moteur à combustion interne, selon lequel, un boîtier commun (10) reçoit un capteur de température (50à) et sur un support (20), un capteur de pression (30) fixé avec son circuit de traitement, pratiquement sans contrainte,
**caractérisé en ce que**
pour induire un fluide sous pression, il est prévu une pièce de support fixée (40) fixée au boîtier (10) et une pièce intermédiaire (60) elle-même fixée au support (20) ainsi qu'à la pièce de support (40) par des liaisons collées (61) assurant le découplage vis-à-vis des contraintes mécaniques.

2. Dispositif selon la revendication 1,
**caractérisé en ce que**
le support (20) est uniquement collé dans le boîtier (10) en des points d'appui prédéterminés (12, 13).

3. Dispositif selon l'une quelconque des revendications 1 ou 2,
**caractérisé par**
un anneau (33) placé autour du capteur de pression (30) et l'intervalle (34) entre l'anneau (33) et le capteur de pression (30) est rempli d'un gel chimiquement inerte.

4. Dispositif selon la revendication 1,
**caractérisé en ce que**
le gel chimiquement inerte est un gel de fluoro-silicium.

5. Dispositif selon l'une quelconque des revendications 1 à 4,
**caractérisé en ce que**
le capteur de température (50) est fixé à la pièce de support (40) pour qu'il pénètre à l'intérieur de celui-ci.

6. Dispositif selon la revendication 5,
**caractérisé en ce que**
les lignes de branchement (52) du capteur de température (50) sont pincées contre deux mâchoires (41) réalisées sur la pièce de support (40) par un étrier d'enclipsage (45) formé de manière élastique sur la pièce de support (40).

7. Dispositif selon la revendication 6,
**caractérisé en ce que**
le capteur de température (50) et les lignes de branchement (52) sont revêtus d'un vernis protecteur ou d'un revêtement protecteur.

8. Dispositif selon la revendication 7,
**caractérisé en ce que**
le vernis protecteur est un vernis polyester imide.

9. Dispositif selon l'une quelconque des revendications 6 à 8,
**caractérisé par**
des liaisons de pincement et de découpe (55) prévues pour réaliser le contact des lignes de branchement (52) du capteur de température (50) avec des broches de connexion (17) prévues dans le boîtier (10) et qui en sortent.
